# FASCICULE DE BREVET EUROPEEN

(11) **EP 2 461 997 B1**
(45) Date de publication et mention de la délivrance du brevet: **05.06.2013**
(21) Numéro de dépôt: 10751996.9
(22) Date de dépôt: 12.07.2010
(51) Int. Cl.: B60K 11/04, B62D 25/08, B62D 27/04, B62D 27/06, B62D 65/04, F28F 9/00

(54) **DISPOSITIF DE FIXATION D'UN ENSEMBLE DE REFROIDISSEMENT SUR LA FACE AVANT D'UN VEHICULE**
VORRICHTUNG ZUR BEFESTIGUNG EINER KÜHLEINHEIT AN DER VORDERSEITE EINES FAHRZEUGES
DEVICE FOR ATTACHING A COOLING UNIT ONTO THE FRONT SIDE OF A VEHICLE

(30) Priorité: 05.08.2009 FR 0955498
(43) Date de publication de la demande: 13.06.2012
(73) Titulaire: Peugeot Citroën Automobiles Société Anonyme, 78140 Vélizy Villacoublay (FR)
(72) Inventeur: SYLVANT, Christophe, F-25420 Courcelles Les Montbeliard (FR); ERNEWEIN, Thierry, F-70400 Hericourt (FR)
(74) Mandataire: Renous Chan, Véronique
(86) Numéro de dépôt international: PCT/FR2010/051463
(87) Numéro de publication internationale: WO 2011/015746

(56) Documents cités:
- EP-A1- 1 067 005
- EP-A2- 1 247 681
- DE-A1- 19 744 173
- DE-A1-102005 004 614
- US-A- 5 544 714

## Description

La présente invention revendique la priorité de la demande française 0955498 déposée le 5 août 2009 dont le contenu (texte, dessins et revendications) est ici incorporé par référence.

La présente invention concerne un dispositif de fixation d'un ensemble de refroidissement sur la face avant d'un véhicule, en particulier d'un véhicule automobile. Elle concerne aussi un procédé de montage/démontage rapide d'un ensemble de refroidissement de véhicule au moyen d'un tel dispositif.

L'ensemble de refroidissement comprend principalement le radiateur et le refroidisseur d'huile intégré. Il maintient le moteur à faible température pour optimiser le rendement énergétique et réduire les émissions polluantes.

De nombreuses solutions techniques sont déjà connues pour fixer un radiateur, ou plus généralement un ensemble de refroidissement, sur le bloc avant d'un véhicule automobile.

A titre d'exemple, le document FR 2 864 817 décrit un dispositif pour fixer un radiateur sur une carrosserie de véhicule automobile, qui comprend un corps de caoutchouc disposé entre la carrosserie et le radiateur. Le corps de caoutchouc est réalisé sous forme d'une pièce séparée, présente un alésage et une liaison par complémentarité de forme avec le radiateur à fixer ou la carrosserie. De plus, il est prévu un élément de réception situé à distance de la liaison par complémentarité de forme et destiné à immobiliser le corps de caoutchouc sur la carrosserie ou sur le radiateur.

Avec ce dispositif, il est nécessaire d'insérer le corps de caoutchouc avant la mise en place du radiateur.

A titre d'exemple également, le document US 5 544 714 décrit une attache à fixation rapide pour fixer un radiateur de véhicule automobile sur un support ayant une fente traversante avec des bords latéraux opposés et espacés qui se font face. Le radiateur est pourvu d'une broche en forme de pion, qui fait saillie à travers la fente. Cette attache comprend un corps, qui comporte une pièce de retenue supérieure, une pièce de retenue inférieure et une collerette « monobloc » avec les pièces de retenue supérieure et inférieure pour espacer ces dernières l'une de l'autre. L'attache comporte également une ouverture axiale qui s'étend à travers les pièces de retenue et la collerette pour recevoir la broche. La pièce de retenue inférieure est dimensionnée de telle sorte que l'attache peut être tournée dans une position donnée par rapport à la fente dans le support et être insérée dedans tandis que la pièce de retenue supérieure couvre au moins une partie de la fente. La collerette présente des premières surfaces périphériques espacées des bords latéraux de la fente lorsque la pièce de retenue inférieure est insérée dans la fente et la broche s'étend à travers l'ouverture axiale. La collerette présente, de plus, des secondes surfaces périphériques espacées radialement des premières surfaces. Ces secondes surfaces sont espacées l'une par rapport à l'autre d'une distance substantiellement égale à la distance qui sépare les deux bords latéraux de la fente. La pièce de retenue supérieure comporte des moyens d'adhérisation de telle sorte que l'attache peut être physiquement tenue et tournée sur la broche vers une position de retenue dans laquelle, d'une part, les pièces de retenue supérieure et inférieure immobilisent des parties opposées du support définissant entre elles la fente et, d'autre part, les secondes surfaces de la collerette viennent physiquement en contact avec les bords latéraux de la fente dans le support. Les pièces de retenue supérieure et inférieure ont des parties en saillie qui s'étendent au-delà des bords latéraux de la fente lorsque l'attache est dans la position de retenue. Un amortisseur élastique, de type caoutchouc, est fixé et supporté par le corps de l'attache pour amortir les vibrations du radiateur.

Cette attache nécessite une bride pour assurer la liaison avec l'élément de structure du véhicule. De plus, le blocage se fait au moyen de vis.

Enfin, on connaît également, par le document GB 2 297 066 A, un dispositif d'amortissement des vibrations d'un véhicule automobile, dans lequel le réservoir supérieur du radiateur est porté, par l'intermédiaire d'une bague supérieure en matériau élastique, par une patte de fixation supérieure disposée sur une partie supérieure de la carrosserie du véhicule. Le réservoir inférieur du radiateur est porté, par l'intermédiaire d'une bague inférieure en matériau élastique, par une patte de fixation inférieure disposée sur une partie inférieure de la carrosserie du véhicule. Un ressort, destiné à supporter de manière élastique le radiateur, est disposé entre le réservoir inférieur et la patte de fixation inférieure, de façon à éviter le contact direct entre le réservoir et la patte de fixation. Le radiateur, les pièces connectées au radiateur et ce ressort forment ensemble un amortisseur dynamique.

Un tel dispositif impose l'utilisation d'une plaque de maintien intermédiaire.
Un dispositif de fixation d'un ensemble de refroidissement sur la face avant d'un véhicule comprenant les caractéristiques du préambule de la revendication 1 est connu du document DE 10 2005 004 614 A1.

De manière générale, les dispositifs utilisés actuellement nécessitent un nombre relativement important d'opérations de montage/démontage et de pièces à assembler.

Le but de la présente invention est de surmonter les inconvénients des dispositifs connus de l'art antérieur en fournissant un dispositif de fixation d'un ensemble de refroidissement sur la face avant d'un véhicule, qui soit tel que l'ensemble de refroidissement puisse être rapidement monté et démonté, et de plus facilement et sans erreur possible grâce à un moyen de « détrompage » au montage.

Un autre but de la présente invention est de fournir un tel dispositif de fixation, qui soit compatible avec une fabrication aisée de la face avant du véhicule.

Enfin, c'est également un but de la présente invention de fournir un tel dispositif de fixation, qui soit, de manière générale, simple, stable, robuste, fiable et économique.

Pour parvenir à ces buts, la présente invention a pour objet un dispositif de fixation d'un ensemble de refroidissement sur la face avant d'un véhicule, en particulier d'un véhicule automobile, qui comprend deux éléments de fixation supérieurs situés à la partie supérieure et proches de l'un et l'autre des deux bords latéraux de l'ensemble de refroidissement, chaque élément de fixation supérieur comportant une patte de fixation, qui est rigidement liée à la face avant du véhicule et qui comporte un orifice traversant d'axe sensiblement vertical, et un plot de fixation, qui est destiné à être inséré dans ledit orifice traversant de la patte de fixation et qui comporte un orifice axial débouchant sur sa surface inférieure pour recevoir une broche rigidement liée à la face supérieure de l'ensemble de refroidissement.

Le plot de fixation de l'élément de fixation supérieur est avantageusement de forme sensiblement cylindrique, l'orifice traversant de la patte de fixation étant de section sensiblement circulaire et de diamètre adapté au diamètre du plot de fixation cylindrique.

Selon un mode préféré de réalisation de l'invention, l'orifice traversant de la patte de fixation comporte un méplat et le plot de fixation comporte une partie plane, le méplat de l'orifice traversant et la partie plane du plot de fixation coopérant par concordance des formes pour constituer un système de « détrompage » au montage de l'ensemble de refroidissement sur la face avant du véhicule.

L'orifice axial débouchant sur la surface inférieure du plot est avantageusement un orifice cylindrique, et la broche rigidement liée à la face supérieure de l'ensemble de refroidissement présente avantageusement la forme d'un pion cylindrique adapté à être inséré dans ledit orifice axial.

Selon l'invention, le plot de fixation de l'élément supérieur de fixation présente, à sa partie supérieure, une collerette qui fait saillie radialement pour recevoir une vis de fixation qui est destinée à bloquer ledit plot sur la patte de fixation et éviter la remontée de ce dernier lors du roulage du véhicule.

Le plot de fixation peut être bloqué sur la patte de fixation par la mise en place de la vis de fixation dans un trou prévu sur la patte de fixation.

De préférence également, le plot de fixation est constitué en deux parties un corps principal, qui est réalisé en une matière ayant une bonne résistance mécanique et à l'usure, et un manchon interne, en matière relativement élastique, qui est monté dans un alésage de la partie inférieure du corps principal et qui comporte l'orifice axial débouchant destiné à recevoir la broche. Ainsi, le corps principal peut être, par exemple, réalisé en polyamide, et le manchon interne en EPDM (Ethylène Propylène Diène Monomère), par exemple.

Le plot de fixation peut avantageusement présenter une patte de préhension, sensiblement plane et verticale, qui s'étend en saillie de la surface supérieure du plot.

De manière préférentielle, le manchon interne est monté par « clippage » dans le corps principal du plot, le plot ayant au moins une fenêtre traversante pour le passage d'un bourrelet radial en saillie du manchon interne.

Dans une variante, le dispositif de fixation de l'invention peut avantageusement comporter deux éléments de positionnement inférieurs disposés à la partie inférieure et proches de l'un et l'autre des deux bords latéraux de l'ensemble de refroidissement, chaque élément de positionnement inférieur comportant une patte de fixation, qui est rigidement liée à la face avant du véhicule et qui comporte un orifice traversant d'axe sensiblement vertical formant trou de positionnement de l'ensemble de refroidissement sur ladite face avant, et un doigt de positionnement, rigidement lié à l'ensemble de refroidissement, qui est destiné à être inséré dans ledit trou de positionnement.

De manière préférentielle également, en ce qui concerne les éléments de positionnement inférieurs mentionnés précédemment, il peut être prévu un plot inférieur, en matière élastique, entre chaque doigt de positionnement et le trou de positionnement correspondant. Ce plot inférieur peut être réalisé en caoutchouc ou bien dans une matière élastique équivalente.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue de dessus, partielle, en perspective, de l'ensemble de refroidissement en position sur la face avant d'un véhicule, avant l'insertion d'un plot de fixation conforme à la présente invention,
- la figure 2 est une vue de face, en perspective, d'un plot de fixation selon la présente invention,
- la figure 3 est une vue de dessus, partielle, en perspective, de l'ensemble de refroidissement en position sur la face avant d'un véhicule, après l'insertion du plot de fixation représenté sur la figure 2,
- la figure 4 est une vue transversale, en coupe, du plot de fixation de l'invention en position montée, et
- la figure 5 est une vue transversale, en coupe, de l'ensemble de refroidissement positionné et fixé sur la face avant du véhicule.

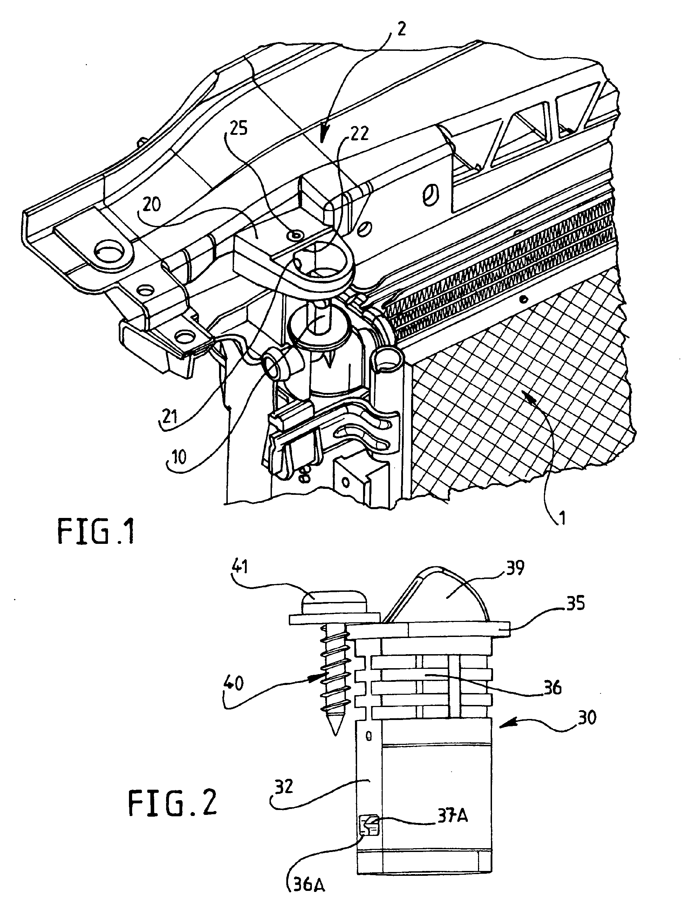

En référence au dessin de la figure 1, on a représenté la partie supérieure gauche d'un ensemble de refroidissement, de référence générale 1, en position non fixée sur la face avant (partiellement représentée), de référence générale 2, d'un véhicule automobile.

La fixation de l'ensemble de refroidissement 1 sur la face avant 2 s'effectue au moyen d'un dispositif de fixation comprenant, d'une part, deux éléments de fixation supérieurs, identiques, situés à la partie supérieure et proches de l'un et l'autre des deux bords latéraux de l'ensemble de refroidissement 1 et, d'autre part, de deux éléments de positionnement inférieurs, identiques, disposés à la partie inférieure et proches de l'un et l'autre des deux bords latéraux de l'ensemble de refroidissement 1.

Les deux éléments de fixation supérieurs étant identiques, on représente et décrit ci-après un seul de ces deux éléments.

Cet élément de fixation comprend :
- une patte de fixation 20, qui est rigidement liée à la face avant 2 du véhicule et qui comporte un orifice traversant 21 d'axe sensiblement vertical, et
- un plot de fixation 30 (figures 2), qui est destiné à être inséré dans l'orifice traversant 21 de la patte de fixation 20 et qui comporte un orifice axial débouchant sur sa surface inférieure pour recevoir une broche 10 (figure 1) rigidement liée à la face supérieure de l'ensemble de refroidissement 1.

En référence aux figures 1 et 2, le plot de fixation 30 est de forme sensiblement cylindrique, l'orifice traversant 21 de la patte de fixation étant de section sensiblement circulaire de diamètre adapté au diamètre du plot de fixation cylindrique.

L'orifice traversant 21 de la patte de fixation comporte un méplat 22 (figure 1) et le plot de fixation 30 comporte une partie plane 32, le méplat 22 de l'orifice traversant 21 et la partie plane 32 du plot de fixation 30 coopérant par concordance des formes pour constituer un système de « détrompage » au montage de l'ensemble de refroidissement 1 sur la face avant 2 du véhicule.

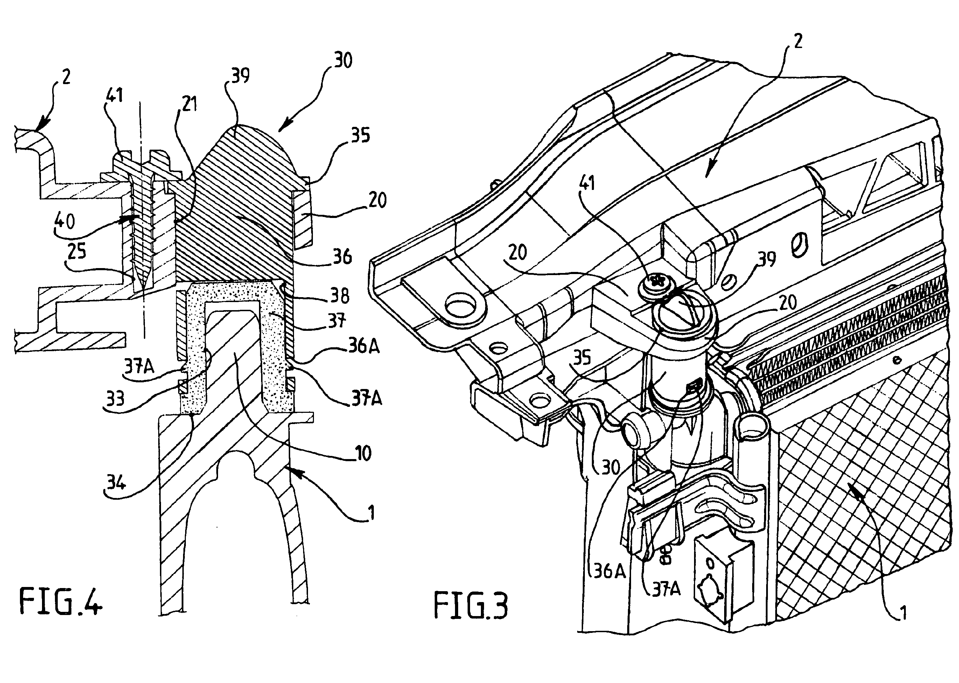

Comme mieux représenté sur la coupe longitudinale de la figure 4, l'orifice axial, référencé 33, débouchant sur la surface inférieure 34 du plot de fixation 30 est un orifice cylindrique, et la broche 10 rigidement liée à la face supérieure de l'ensemble de refroidissement 1 présente la forme d'un pion cylindrique adapté à être inséré dans l'orifice axial 33.

Le plot de fixation 30 présente, à sa partie supérieure, une collerette 35 qui fait saillie radialement pour recevoir la tête 41 d'une vis de fixation 40 qui est destinée à bloquer le plot de fixation 30 sur la patte de fixation 20 et éviter la remontée du plot 30 lors du roulage du véhicule.

Le plot de fixation 30 est bloqué sur la patte de fixation 20 par la mise en place de la vis de fixation 40 dans un trou 25 prévu sur la patte de fixation 20.

Le plot de fixation 30 est constitué en deux parties (voir figure 4 principalement):
- un corps principal 36, qui est réalisé en une matière ayant une bonne résistance mécanique et à l'usure, et
- un manchon interne 37, en matière relativement élastique, qui est monté dans un alésage 38 de la partie inférieure du corps principal 36 et qui comporte l'orifice axial 33 débouchant destiné à recevoir la broche 10.

Le corps principal 36 du plot de fixation 30 est réalisé, de préférence, en polyamide, et le manchon interne 37 est réalisé, de préférence, en EPDM (Ethylène Propylène Diène Monomère).

Le plot de fixation 30 présente une patte de préhension 39, sensiblement plane et verticale, qui s'étend en saillie de la surface supérieure du plot.

Le manchon interne 37 est monté par « clippage » dans le corps principal 36 du plot de fixation 30, le plot de fixation 30 ayant au moins une fenêtre traversante 36A pour le passage d'un bourrelet radial 37A en saillie du manchon interne 37. Ces fenêtres 36A sont avantageusement au nombre de deux et diamétralement opposées.

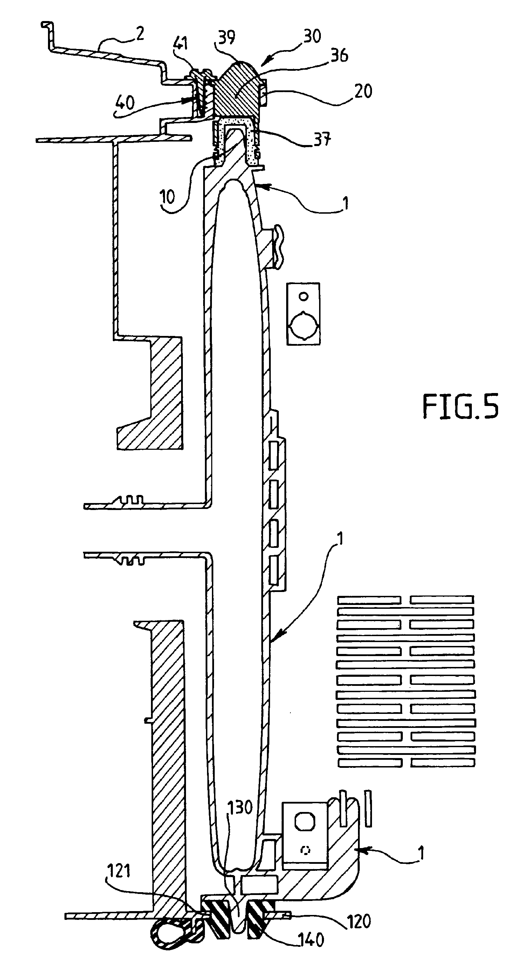

Comme mieux représenté sur le dessin de la figure 5, le dispositif de fixation de l'invention comporte, de plus, deux éléments de positionnement inférieurs disposés à la partie inférieure et proches de l'un et l'autre des deux bords latéraux de l'ensemble de refroidissement 1.

Les deux éléments de positionnement inférieurs étant identiques, on représente et décrit ci-après un seul de ces deux éléments, chaque élément de positionnement inférieur comportant :
- une patte de fixation 120, qui est rigidement liée à la face avant 2 du véhicule et qui comporte un orifice traversant 121 d'axe sensiblement vertical formant trou de positionnement de l'ensemble de refroidissement 1 sur la face avant 2, et
- un doigt de positionnement 130, rigidement lié à l'ensemble de refroidissement 1, qui est destiné à être inséré dans le trou de positionnement 121.

Il est prévu un plot inférieur 140, en matière élastique, entre le doigt de positionnement 130 et le trou de positionnement 121.

De préférence, le plot inférieur 140 est réalisé en caoutchouc.

L'invention concerne également un procédé de montage rapide d'un ensemble de refroidissement 1 de véhicule, en particulier de véhicule automobile, équipé d'un dispositif de fixation conforme à celui décrit ci-dessus.

En référence à la figure 5, ce procédé comporte les étapes suivantes :
- on vient « coiffer » l'ensemble de refroidissement 1 à travers la face avant 2 du véhicule, en plaçant les doigts de positionnement 140 dans les trous de positionnement 121,
- on incline l'ensemble de refroidissement 1 en position sensiblement verticale,
- on insère les plots de fixation 30 dans les pattes de fixation 20 des éléments de fixation supérieurs de la face avant 2, en les coulissant sur les broches 10 de l'ensemble de refroidissement 1, et
- on met en place par vissage les vis de fixation 40 des deux plots de fixation 30, de manière à bloquer l'ensemble de refroidissement 1 sur la face avant 2 du véhicule.

Le démontage rapide s'effectue facilement avec un minimum d'opérations :
- on enlève les vis de fixation 40 retenant les plots de fixation 30,
- on sort les plots de fixation 30 des pattes de fixation 20 des éléments de fixation supérieurs de la face avant 2, et
- on enlève l'ensemble de refroidissement 1.

Grâce au dispositif de fixation décrit ci-dessus, le montage et le démontage de l'ensemble de refroidissement sur la face avant du véhicule sont faciles et rapides.

De plus, le dispositif de fixation décrit ci-dessus est compatible avec une fabrication aisée de la face avant du véhicule.

Enfin, ce dispositif de fixation est de conception et de réalisation simple, et économique.

## Revendications

1. Dispositif de fixation d'un ensemble de refroidissement (1) sur la face avant (2) d'un véhicule, en particulier d'un véhicule automobile, qui comprend deux éléments de fixation supérieurs situés à la partie supérieure et proches de l'un et l'autre des deux bords latéraux de l'ensemble de refroidissement (1), chaque élément de fixation supérieur comportant une patte de fixation (20), qui est rigidement liée à la face avant (2) du véhicule et qui comporte un orifice traversant (21) d'axe sensiblement vertical, et un plot de fixation (30), qui est destiné à être inséré dans ledit orifice traversant (21) de la patte de fixation (20) et qui comporte un orifice axial (33) débouchant sur sa surface inférieure (34) pour recevoir une broche (10) rigidement liée à la face supérieure de l'ensemble de refroidissement (1), **caractérisé en ce que** le plot de fixation (30) présente, à sa partie supérieure, une collerette (35) qui fait saillie radialement pour recevoir la tête (41) d'une vis de fixation (40) qui est destinée à bloquer ledit plot de fixation (30) sur la patte de fixation (20) et éviter la remontée de ce dernier lors du roulage du véhicule.

2. Dispositif de fixation selon la revendication 1, **caractérisé en ce que** le plot de fixation (30) est de forme sensiblement cylindrique, l'orifice traversant (21) de la patte de fixation (20) étant de section sensiblement circulaire et de diamètre adapté au diamètre du plot de fixation (30) cylindrique.

3. Dispositif de fixation selon la revendication 2, **caractérisé en ce que** ledit orifice traversant (21) de la patte de fixation (20) comporte un méplat (22) et le plot de fixation (30) comporte une partie plane (32), le méplat (22) de l'orifice traversant (21) et la partie plane (32) du plot de fixation (30) coopérant par concordance des formes pour constituer un système de « détrompage » au montage de l'ensemble de refroidissement (1) sur la face avant (2) du véhicule.

4. Dispositif de fixation selon la revendication 1, **caractérisé en ce que** l'orifice axial (33) débouchant sur la surface inférieure (34) du plot de fixation (30) est un orifice cylindrique, et **en ce que** la broche (10) rigidement liée à la face supérieure de l'ensemble de refroidissement (1) présente la forme d'un pion cylindrique adapté à être inséré dans ledit orifice axial (33).

5. Dispositif de fixation selon la revendication 1 ou la revendication 4, **caractérisé en ce que** le plot de fixation (30) est bloqué sur la patte de fixation (20) par la mise en place de ladite vis de fixation (40) dans un trou (25) prévu sur la patte de fixation (20).

6. Dispositif de fixation selon l'une quelconque des revendications 1 à 5, **caractérisé en ce que** le plot de fixation (30) est constitué en deux parties un corps principal (36), qui est réalisé en une matière ayant une bonne résistance mécanique et à l'usure, et un manchon interne (37), en matière relativement élastique, qui est monté dans un alésage (38) de la partie inférieure du corps principal (36) et qui comporte l'orifice axial (33) débouchant destiné à recevoir la broche (10).

7. Dispositif de fixation selon la revendication 1, **caractérisé en ce qu'**il comporte, de plus, deux éléments de positionnement inférieurs situés à la partie inférieure et proches de l'un et l'autre des deux bords latéraux de l'ensemble de refroidissement (1), chaque élément de positionnement inférieur comportant une patte de fixation (120), qui est rigidement liée à la face avant (2) du véhicule et qui comporte un orifice traversant (121) d'axe sensiblement vertical formant trou de positionnement de l'ensemble de refroidissement (1) sur ladite face avant (2), et un doigt de positionnement (130), rigidement lié à l'ensemble de refroidissement (1), qui est destiné à être inséré dans ledit trou de positionnement (121).

8. Dispositif de fixation selon la revendication 7, **caractérisé en ce qu'**il est prévu un plot inférieur (140), en matière élastique, entre le doigt de positionnement (130) et le trou de positionnement (121) de l'élément de positionnement inférieur.

9. Dispositif de fixation selon la revendication 8, **caractérisé en ce que** ledit plot inférieur (140) est réalisé en caoutchouc.

## Patentansprüche

1. Vorrichtung zur Befestigung einer Kühleinheit (1) auf der Vorderseite (2) eines Fahrzeugs, insbesondere eines Kraftfahrzeugs, die zwei obere Befestigungselemente aufweist, die sich an dem oberen Teil und in der Nähe voneinander der zwei seitlichen Ränder der Kühleinheit (1) befinden, wobei jedes obere Befestigungselement eine Befestigungspratze (20) aufweist, die starr mit der Vorderseite (2) des Fahrzeugs verbunden ist, und die eine durchgehende Öffnung (21) mit im Wesentlichen vertikaler Achse aufweist, und einen Befestigungsstift (30), der dazu bestimmt ist, in die durchgehende Öffnung (21) der Befestigungspratze (20) eingefügt zu werden, und die eine axiale Öffnung (33) aufweist, die auf ihrer unteren Oberfläche (34) mündet, um eine Spindel (10) aufzunehmen, die starr mit der oberen Seite der Kühleinheit (1) verbunden ist, **dadurch gekennzeichnet, dass** der Befestigungsstift (30) an seinem oberen Teil einen Kragen (35) aufweist, der radial vorsteht, um den Kopf (41) einer Befestigungsschraube (40) aufzunehmen, die dazu bestimmt ist, den Befestigungsstift (30) auf der Befestigungspratze (20) zu blockieren und das Hochsteigen dieser Letzteren beim Fahren des Fahrzeugs zu vermeiden.

2. Befestigungsvorrichtung nach Anspruch 1, **dadurch gekennzeichnet, dass** der Befestigungsstift (30) im Wesentlichen zylindrische Form hat, wobei die durchgehende Öffnung (21) der Befestigungspratze (20) einen im Wesentlichen kreisförmigen Querschnitt und Durchmesser hat, der an den Durchmesser des zylindrischen Befestigungsstifts (30) angepasst ist.

3. Befestigungsvorrichtung nach Anspruch 2, **dadurch gekennzeichnet, dass** die durchgehende Öffnung (21) der Befestigungspratze (20) einen Flachteil (22) aufweist, und dass der Befestigungsstift (30) einen flachen Teil (32) aufweist, wobei der Flachteil (22) der durchgehenden Öffnung (21) und der flache Teil (32) des Befestigungsstifts (30) durch Übereinstimmung der Formen zusammenwirken, um ein Unverwechselbarkeitssystem bei der Montage der Kühleinheit (1) auf die Vorderseite (2) des Fahrzeugs zu bilden.

4. Befestigungsvorrichtung nach Anspruch 1, **dadurch gekennzeichnet, dass** die axiale Öffnung (33), die auf die untere Oberfläche (34) des Befestigungsstifts (30) mündet, eine zylindrische Öffnung ist, und dass die Spindel (10), die starr mit der oberen Seite der Kühleinheit (1) verbunden ist, die Form eines zylindrischen Stifts aufweist, der dazu angepasst ist, in die axiale Öffnung (33) eingefügt zu werden.

5. Befestigungsvorrichtung nach Anspruch 1 oder Anspruch 4, **dadurch gekennzeichnet, dass** der Befestigungsstift (30) auf der Befestigungspratze (20) durch das Anbringen der Befestigungsschraube (40) in einem Loch (25), das auf der Befestigungspratze (20) vorgesehen ist, blockiert wird.

6. Befestigungsvorrichtung nach einem der Ansprüche 1 bis 5, **dadurch gekennzeichnet, dass** der Befestigungsstift (30) aus zwei Teilen eines Hauptkörpers (36) besteht, der aus einem Material hergestellt ist, das eine gute mechanische und Verschleißbeständigkeit hat, und aus einer inneren Hülse (37) aus relativ elastischem Material, die in eine Bohrung (38) des unteren Teils des Hauptkörpers (36) montiert ist und die die durchgehende axiale Öffnung (33) aufweist, die dazu bestimmt ist, die Spindel (10) aufzunehmen.

7. Befestigungsvorrichtung nach Anspruch 1, **dadurch gekennzeichnet, dass** sie außerdem zwei untere Positionierungselemente aufweist, die sich an dem unteren Teil und in der Nähe voneinander der zwei seitlichen Ränder der Kühleinheit (1) befinden, wobei jedes untere Positionierungselement eine Befestigungspratze (120) aufweist, die starr mit der Vorderseite (2) des Fahrzeugs verbunden ist und die eine durchgehende Öffnung (121) mit einer im Wesentlichen vertikalen Achse, aufweist, die eine Positionierungsöffnung der Kühleinheit (1) auf der Vorderseite (2) bildet, und einen Positionierungsfinger (130), der starr mit der Kühleinheit (1) verbunden ist, der dazu bestimmt ist, in das Positionierungsloch (121) eingefügt zu werden.

8. Befestigungsvorrichtung nach Anspruch 7, **dadurch gekennzeichnet, dass** ein unterer Stift (140) aus elastischem Material zwischen dem Positionierungsfinger (130) und dem Positionierungsloch (121) des unteren Positionierungselements vorgesehen ist.

9. Befestigungsvorrichtung nach Anspruch 8, **dadurch gekennzeichnet, dass** der untere Stift (140) aus Kautschuk hergestellt ist.

## Claims

1. A device for attaching a cooling unit (1) onto the front face (2) of a vehicle, in particular of a motor vehicle, which includes two upper attachment elements situated at the upper portion and close to the one and the other of the two side edges of the cooling unit (1), each upper attachment element comprising an attachment lug (20), which is rigidly connected to the front face (2) of the vehicle and which comprises a through-opening (21) having a substantially vertical axis, and an attachment contact (30), which is intended to be inserted in the said through-opening (21) of the attachment lug (20) and which comprises an axial opening (33) opening out on its lower surface (34) to receive a pin (10) rigidly connected to the upper face of the cooling unit (1), **characterized in that** the attachment contact (30) has, on its upper part, a collar (35) which projects radially to receive the head (41) of an attachment screw (40) which is intended to lock the said attachment contact (30) on the attachment lug (20) and to prevent the lifting thereof when the vehicle is running.

2. The attachment device according to Claim 1, **characterized in that** the attachment contact (30) is of substantially cylindrical shape, the through-opening (21) of the attachment lug (20) being of substantially circular cross-section and having a diameter adapted to the diameter of the cylindrical attachment contact (30).

3. The attachment device according to Claim 2, **characterized in that** the said through-opening (21) of the attachment lug (20) comprises a flat section (22) and the attachment contact (30) comprises a plane part (32), the flat section (22) of the through-opening (21) and the plane part (32) of the attachment contact (30) cooperating by concordance of the shapes to constitute a "foolproof" system on mounting of the cooling unit (1) on the front face (2) of the vehicle.

4. The attachment device according to Claim 1, **characterized in that** the axial opening (33) opening out on the lower surface (34) of the attachment contact (30) is a cylindrical opening, and **in that** the pin (10) rigidly connected to the upper face of the cooling unit (1) has the shape of a cylindrical stud able to be inserted in the said axial opening (33).

5. The attachment device according to Claim 1 or Claim 4, **characterized in that** the attachment contact (30) is locked on the attachment lug (20) by the placing of the said attachment screw (40) in a hole (25) provided on the attachment lug (20).

6. The attachment device according to any one of Claims 1 to 5, **characterized in that** the attachment contact (30) is constituted in two parts, a main body (36), which is made from a material having a good mechanical resistance and resistance to wear, and an internal sleeve (37), of relatively elastic material, which is mounted in a bore (38) of the lower part of the main body (36) and which comprises the axial opening (33) which opens out, intended to receive the pin (10).

7. The attachment device according to Claim 1, **characterized in that** it comprises, in addition, two lower positioning elements situated at the lower part and close to the one and the other of the two side edges of the cooling unit (1), each lower positioning element comprising an attachment lug (120), which is rigidly connected to the front face (2) of the vehicle and which comprises a through-opening (121) having a substantially vertical axis forming a positioning hole of the cooling unit (1) on the said front face (2), and a positioning finger (130), rigidly connected to the cooling unit (1), which is intended to be inserted in the said positioning hole (121).

8. The attachment device according to Claim 7, **characterized in that** a lower contact (140) of elastic material is provided between the positioning finger (130) and the positioning hole (121) of the lower positioning element.

9. The attachment device according to Claim 8, **characterized in that** the said lower contact (140) is made of rubber.
